# EUROPÄISCHE PATENTSCHRIFT

(11) **EP 4 416 402 B1**
(45) Veröffentlichungstag und Bekanntmachung des Hinweises auf die Patenterteilung: **03.12.2025**
(21) Anmeldenummer: 22802097.0
(22) Anmeldetag: 13.10.2022
(51) Int. Cl.: F16C 33/58, F16C 35/067, F16C 35/077

(54) **HAUPTLAGERANORDNUNG FÜR EINE WINDENERGIEANLAGE**
MAIN BEARING ASSEMBLY FOR A WIND TURBINE
ENSEMBLE PALIER PRINCIPAL POUR ÉOLIENNE

(30) Priorität: 15.10.2021 DE 102021211700; 15.10.2021 BE 202105812
(43) Veröffentlichungstag der Anmeldung: 21.08.2024
(73) Patentinhaber: thyssenkrupp rothe Erde Germany GmbH, 44137 Dortmund (DE); thyssenkrupp AG, 45143 Essen (DE)
(72) Erfinder: ROLLMANN, Jörg, 59558 Lippstadt (DE); LIEWEN, Christian, 59558 Lippstadt (DE); LÜNEBURG, Bernd, 45481 Mülheim (DE); MEVIUS, Lars, 59558 Lippstadt (DE)
(74) Vertreter: thyssenkrupp Intellectual Property GmbH
(86) Internationale Anmeldenummer: PCT/EP2022/078549
(87) Internationale Veröffentlichungsnummer: WO 2023/062144

(56) Entgegenhaltungen:
- WO-A1-2018/153419
- CN-A- 113 187 874
- DE-A1- 102021 203 603
- DE-U1- 202014 102 358

## Beschreibung

Die Erfindung betrifft eine Hauptlageranordnung für eine Windenergieanlage. Mit einem Hauptlager wird der Rotor einer Windenergieanlage (also z.B. die Rotorwelle, welche die Rotornabe einer Windenergieanlage mit einem Getriebe oder direkt mit einem Generator zur Stromerzeugung verbindet) gelagert.

In der Druckschrift EP 2 947 339 B1 wird beschrieben, dass bei bekannten Hauptlageranordnungen zur Lagerung eines drehbaren Rotors einer Windenergieanlage der Rotor über mindestens ein Wälzlager drehbar gegenüber einer drehfesten Anschlusskonstruktion der Windenergieanlage gelagert ist, wobei das Wälzlager einen Innenring aufweist, der über seine radiale Innenumfangsfläche mit einer Mantelfläche des Rotors über einen Presssitz verbundenen ist.

Die EP 2 947 339 B1 befasst sich mit dem Problem des so genannten Ringwanderns, das insbesondere bei Großlagern, die als Hauptlager des Rotors/der Rotorwelle von Windenergieanlagen eingesetzt werden und die mehrere Meter große Durchmesser aufweisen ein relevantes Problem darstellt. In EP 2 947 339 B1 wird die Problematik des Ringwanderns bei Hauptlagern von Windenergieanlagen sowie aus dem Stand der Technik bekannte Maßnahmen zur Verhinderung des Ringwanderns ausführlich wie folgt beschrieben:
Mit immer größeren Wälzlagern hat sich insbesondere ein sicherer Lagersitz als problematisch herausgestellt. Hauptlager von Rotoren von Windenergieanlagen werden üblicherweise mittels so genannter Presssitze positioniert bzw. befestigt, d.h. ein jeweiliger Lagerring des Wälzlagers, also ein Innenring sowie ein Außenring, werden in eine entsprechende ringförmige Aufnahme am Rotor bzw. an der Anschlusskonstruktion eingepresst. Dabei handelt es sich um eine Passungspaarung mit Übermaß, womit ein kraftschlüssiger Verband entsteht (auch als "Pressverband" bezeichnet).

Bei großen Lagerdurchmessern ergibt sich ein sehr ungünstiges Verhältnis von Durchmesser/Ringquerschnitt, womit eine ausreichende Kraft (Fugenpressung) für einen festen Lagersitz nicht mehr sichergestellt werden kann. Eine weitere Erhöhung des Passungsübermaßes führt nur zu einer geringfügigen Erhöhung der Fugenpressung, da der dünnwandige Lagerring sich leichter aufweitet, wohingegen der massivere Rotor bzw. die massivere Anschlusskonstruktion sich nur geringfügig einschnürt. Eine zu starke Aufweitung des Lagerrings wiederum führt zu hohen Zugspannungen bzw. Druckspannungen im Lagerring, was zu einer negativen Beeinflussung der Laufbahngeometrie durch Formabweichungen des Lagerrings führen kann. Weiterhin wird dadurch auch bei vielen Lagerbauformen die Lagerluft, also ein positives Lagerspiel verändert, was sich direkt auf die Lebensdauer und Laufruhe des Lagers negativ auswirken kann.

Der somit nicht ausreichende Presssitz zwischen Lagerring und Rotor/ Anschlusskonstruktion birgt daher das Risiko von Passungsrost und Ringwandern, was zum Versagen der Wälzlagerung und/oder des Rotors (der Rotorwelle) bzw. der Anschlusskonstruktion (auch als "Gehäuse" der Windenergieanlagengondel bezeichnet) führt. Der Schadensmechanismus beginnt in der Regel mit kleinen Relativbewegungen im Lagersitz zwischen diesem und dem Lagerring, die aufgrund zu geringer Spannungen bzw. Kräfte (Fugenpressung) möglich werden. Dadurch kommt es zum gleitenden Verdrehen (in Umfangsrichtung) und Verschieben (in Axialrichtung) der Passungsflächen zueinander. Hierdurch werden Randschichtteilchen meist vom weicheren Bauteil abgeschert, wodurch Löcher und schuppenartige Materialteilchen entstehen. Man spricht bei diesem Verschleißmechanismus von adhäsivem Verschleiß. Überlagert und beschleunigt wird dieser Prozess durch eine Oxidation in der Passungsfuge. Aufgrund der Relativbewegungen können Wasser, Sauerstoff und andere Medien in den Kontaktbereich gelangen, was wiederum zu einer chemischen Reaktion führt, die in Kombination mit der Bauteilbewegung als Tribooxidation bezeichnet wird.

In der Regel ermüdet bei diesem Schadensverlauf der weichere Teil in der Verschleißkette, was in der Regel die Welle bzw. das Gehäuse / die Anschlusskonstruktion ist. Oftmals kommt es erst zum großflächigen Materialabtrag unter dem Lager und letztendlich zum Bruch der Welle direkt am Lagersitz aufgrund der Kerbwirkung und hohen Kräfte. Verstärkt wird diese Problematik durch den erforderlichen Leichtbau in der Windkraft. Aufgrund der limitierten Turmkopfmassen, des anspruchsvollen Transportes und der teuren Krankapazitäten wird versucht, die mechanischen Strukturen leichter zu gestalten. Maschinenträger, Welle und Gehäuse sind daher nicht (mehr) als hochsteife Strukturbauteile anzusehen. Doch genau eine sehr steife Umgebung wird bei der Basisauslegung von den Wälzlagerherstellern für jedes Wälzlager gefordert. Die Strukturbauteile moderner Windkraftanlagen verformen sich unter den hohen Windlasten so massiv, dass auch der Wälzlagersitz großflächigen Verformungen unterworfen ist. Diese globalen Verformungen tragen zusätzlich zur Verschärfung der Problematik hinsichtlich Passungsrost und adhäsivem Verschleiß bei.

Weiterhin problematisch an der zunehmenden Lagergröße sind die erhöhten Toleranzen für die Lagersitzflächen. Eine Passung für einen Lagerring von 2,5m Durchmesser weist ein sehr hohes Toleranzfeld auf. Kombiniert mit dem ebenfalls hohen Toleranzfeld für den Lagersitz an der Welle oder am Gehäuse ergibt sich eine hohe Schwankung in der Presspassung. Fallen diese hohen Toleranzen ungünstig zusammen, verbleibt nur noch ein sehr geringer Anteil an Fugenpressung in dem Presssitz. Somit ist dieser Presssitz besonders anfällig auf Relativbewegung, die Passungsrost und adhäsiven Verschleiß auslöst. Dies erklärt auch die unterschiedlichen Ausfallraten bei Schäden durch Passungsrost und Verschleiß im Pressverband.

Insbesondere für Hauptlager von Windenergieanlagen gibt es aktuell noch keine hinreichenden technischen Lösungen für diese Problematik. Spezielle Kunststoffbeschichtungen wie PTFE auf dem Lagerring und/oder am Lagersitz an der Welle bzw. am Gehäuse können die Problematik der chemischen Reaktion zwischen den beiden metallischen Passungsträgern etwas reduzieren. Allerdings wird sich die Problematik des geringen Fugendrucks mit solchen Beschichtungen nicht beheben lassen. Harte Schichten wie DLC (Diamond Like Carbon) oder Hartchrombeschichtung für Lagerring und/oder Welle bzw. Gehäuse können den adhäsiven Verschleiß reduzieren, jedoch bleibt die Problematik der chemischen Reaktion und somit des Passungsrostes bestehen. Da beide Alternativen nur einen der zwei Verschleißmechanismen reduzieren und zudem mit sehr hohen Kosten verbunden sind, werden sie bei Hauptlagerungen nicht eingesetzt.

Alternativ wurden in den letzten Jahren bereits Einlager-Lösungen mit verschraubten Außenringen und später auch des Innenringes der Hauptlagerung eingesetzt. Fokus war jedoch hier nicht der Pressverband, sondern die Schaffung einer voreinstellbaren Lageranordnung.

Die Verschraubung von Lagerringen ist jedoch wie bekannt mit zahlreichen Nachteilen verbunden. Dazu zählen hohe Ringquerschnitte (Gewicht & Kosten), limitierte Steifigkeit der Verschraubung sowie schwierige Montage solcher Wälzlagersysteme.

Die EP 2 947 339 B1 schlägt zur Verringerung oder sogar Unterbindung der beschriebenen Probleme hinsichtlich Passungsrost, adhäsivem Verschleiß und Ringwandern vor, dass sich die Wälzkörper des Hauptlagers an der Rotorwelle bzw. dem Gehäuse / der Anschlusskonstruktion unmittelbar ohne separaten Lagerring an einer Laufbahn abstützen, die integrierter Bestandteil der Rotorwelle bzw. des Gehäuses / der Anschlusskonstruktion ist. Diese Maßnahme hat jedoch mehrere gravierende Nachteile. Zum einen müssen die in die Rotorwelle bzw. das Gehäuse integrierten Wälzkörperlaufbahnen gehärtet werden, um die geforderte Lebensdauer des Hauptlagers erreichen zu können. Dies ist bei integral mit den Rotorwellen und Gehäusebauteilen ausgebildeten Laufbahnen jedoch technisch sehr schwierig, aufwändig und teuer, weil z.B. an der gesamten Rotorwelle nur die integrierte Laufbahn zum Härten selektiv erwärmt und abgeschreckt werden muss, dabei jedoch die gesamte Rotorwelle gehandhabt werden muss. Zum anderen ist es nicht möglich, im Fall eines Lagerschadens das Lager oder einzelne Lagerringe auszutauschen, sondern es ist erforderlich, das gesamte Bauteil mit der integrierten Wälzkörperlaufbahn auszutauschen, was viel aufwändiger und sehr viel höhere Kosten verursacht.

In der Druckschrift DE 10 2017 109 148 A1 wird eine Verdrehsicherung für ein Wälzlager zur Verhinderung des Ringwanderns und zur gleichzeitigen Erreichung einer gewünschten Lagervorspannung in einer Gehäuse-Welle-Anordnung beschrieben. Die Welle ist über das Wälzlager relativ zum Gehäuse drehbar gelagert. Der Innenring des Wälzlagers ist drehfest mit der Welle verbunden. Der Außenring des Wälzlagers ist über ein Sicherungselement relativ zum Gehäuse in axialer Richtung vorgespannt und gegen Verdrehen gesichert. Das Sicherungselement ist als Wellenfeder ausgestaltet. Die Wellenfeder greift mit einem in axialer Richtung hervorstehenden ersten Federbogenbereich in zumindest eine Ausnehmung des Außenrings des Wälzlagers ein. Gleichzeitig weist die Wellenfeder zumindest einen zweiten Federbogenbereich auf, der in eine Aussparung eines gehäusefesten Bauteils eingreift.

Die in DE 10 2017 109 148 A1 beschriebene Verdrehsicherung scheint für die Verwendung in kleineren Gehäuse-Welle-Anordnungen zum Beispiel in Kraftfahrzeugen vorgesehen zu sein. Für den Einsatz in Hauptlageranordnungen von Windenergieanlagen ist diese Verdrehsicherung nicht geeignet, weil dazu eine sehr große Wellenfeder mit mehreren Metern Durchmesser erforderlich wäre. Dieses zusätzliche Sicherungselement würde das Gesamtgewicht der Hauptlageranordnung sehr stark erhöhen. Der Einbau einer solchen Wellenfeder wäre sehr schwierig und aufwändig. Außerdem würde es nicht möglich sein, die großen Kräfte, die erforderlich sind, um die Großwälzlager von Hauptlageranordnungen von Windenergieanlagen axial vorzuspannen, über eine gemäß der Lehre der DE 10 2017 109 148 A1 eingebaute Wellenfeder aufzubringen.

In der DE 10 2021 203 603 A1 wird eine Getriebeanordnung (101) für Windkraftanlagen mit einem Gehäuseteil (103), einem Lager (105), einer Welle (107), einem Passelement (113) und einer Abdeckung (111) beschrieben. Die Welle (107) ist mittels des Lagers (105) drehbar in dem Gehäuseteil (103) gelagert. Die Abdeckung (111) ist mindestens drehfest in dem Gehäuseteil (103) fixiert und deckt einen zwischen dem Gehäuseteil (103) und der Welle (107) verlaufenden Spalt mindestens teilweise ab. Das Passelement (113) greift formschlüssig in einen Ring (105a) des Lagers (105) und in die Abdeckung (111) ein. Nachteilig bei dieser Lösung ist, dass ein Gehäuseteil, eine mit dem Gehäuseteil verbundene Abdeckung und ein separates Passelement erforderlich sind, um die beschriebene Lösung umzusetzen. Der Zusammenbau der Getriebeanordnung ist dadurch aufwendig. Die Lösung ist außerdem ausschließlich bei Windkraftanlagen mit Getriebe anwendbar, nicht bei getriebelosen Anlagen.

In der WO 2018/153419 A1 beschreibt eine Hauptrotoranordnung (10) für eine Windkraftanlage (2), umfassend eine Hauptrotorwelle (18), die sich in einer axialen Richtung erstreckt und an ihrem Nabenanschlussende einen Nabenanschlussflansch (18a) aufweist, wobei der Nabenanschlussflansch (18a) sich radial nach innen erstreckt, so dass er in einen allgemein zylindrischen ersten Wellenabschnitt (68) mit einem ersten Durchmesser, wobei der erste Wellenabschnitt (68) an einer Schulter (72) in einen zweiten Wellenabschnitt (70) übergeht, wobei der zweite Wellenabschnitt (70) einen reduzierten Durchmesser im Vergleich zum ersten Wellenabschnitt (68) aufweist. Die Hauptrotoranordnung (10) umfasst ein vorderes Lager (24), das auf der Hauptrotorwelle (18) getragen wird und das einen Innenring (36), einen Außenring (38) und einen Satz von Rollen (40) umfasst, wobei der Innenring (36) eine radial innere Oberfläche (78) aufweist, die in Kontakt mit dem zweiten Wellenabschnitt (70) steht und die eine Innenringschulter (79) definiert, die an der Wellenschulter (72) anliegt, die zwischen dem ersten Wellenabschnitt (68) und dem zweiten Wellenabschnitt (70) definiert ist. Der vorliegenden Erfindung liegt die Aufgabe zu Grunde, eine Hauptlageranordnung zur drehbaren Lagerung eines Rotors einer Windenergieanlage zur Verfügung zu stellen, bei der die voranstehend beschriebenen Schäden und Nachteile vermieden werden. Insbesondere sollen die Schäden vermieden werden die durch Ringwandern des mittels Presssitz in einer ringförmigen Aufnahme der Anschlusskonstruktion angeordneten Wälzlageraußenrings auftreten. Außerdem soll die Hauptlageranordnung sowohl bei getriebelosen Windenergieanlagen, als auch bei solchen mit Getriebe einsetzbar sein.

Gelöst wird diese Aufgabe durch eine Hauptlageranordnung mit den in dem unabhängigen Anspruch angegebenen Merkmalen. Vorteilhafte Weiterbildungen ergeben sich aus den Unteransprüchen, der nachfolgenden Beschreibung sowie den Zeichnungen.

Die Erfindung geht von einer Hauptlageranordnung zur Lagerung eines drehbaren Rotors einer Windenergieanlage, wobei der Rotor über mindestens ein Wälzlager drehbar gegenüber einer Anschlusskonstruktion gelagert ist, wobei das Wälzlager einen Außenring aufweist, der über seine radiale Außenumfangsfläche mit einer ringförmigen Aufnahme der Anschlusskonstruktion über einen Presssitz verbundenen ist, wobei der Außenring an mindestens einer axialen Stirnfläche mindestens ein erstes Formschlusselement aufweist, wobei ein mit der Anschlusskonstruktion drehfest verbundenes Gegenelement vorgesehen ist, welches mindestens ein zweites Formschlusselement aufweist, und wobei zwischen dem ersten und dem zweiten Formschlusselement eine in Umfangsrichtung des Außenrings wirksame Formschlussverbindung ausgebildet ist..

Erfindungsgemäß ist vorgesehen, dass das mindestens eine erste Formschlusselement als in Axialrichtung gegenüber der Stirnfläche des Außenrings vorspringender Vorsprung und das mindestens eine zweite Formschlusselement als in Axialrichtung gegenüber der Stirnfläche des Bauteils oder des Flansches zurückspringende Ausnehmung ausgebildet ist, oder dass das mindestens eine erste Formschlusselement als in Axialrichtung gegenüber der Stirnfläche des Außenrings zurückspringende Ausnehmung und das mindestens eine zweite Formschlusselement als in Axialrichtung gegenüber der Stirnfläche des Bauteils oder des Flansches vorspringender Vorsprung ausgebildet ist, wobei der Vorsprung in die Ausnehmung unter Ausbildung der in Umfangsrichtung wirksamen Formschlussverbindung eingreift..

Das Gegenelement kann durch einen an der Anschlusskonstruktion ausgebildeten radialen Flansch gebildet werden. Alternativ kann auch ein mit der Anschlusskonstruktion drehfest verbundener Ring das Gegenelement bilden. Ein solcher Ring kann auf unterschiedliche Weise drehfest mit der Anschlusskonstruktion verbunden sein, z.B. mittels Schraubverbindungen, durch Verschweißung, Verklebung oder Verlötung, usw.

Durch die erfindungsgemäße Lösung wird der Vorteil erreicht, dass keine hochgenaue Fertigung der axialen Stirnflächen (Nut und Nase) notwendig ist. Durch ein umfangsseitiges, im Betrieb des Lagers auftretendes Setzen der formschlüssigen Verbindung zwischen Lagerring und Gegenelement und eine damit einhergehende Zunahme der tragenden umfangsseitigen Bereiche der Verbindung wird eine steigende umfangsseitige Tragkraft und Steifigkeit der Verbindung erzielt. Mit jeder Setzerscheinung wird die umfangsseitige Relativbewegung von Lagerring und Anschlusskonstruktion kleiner und kommt letztendlich zum Erliegen. Die Setzerscheinungen werden durch die in Umfangsrichtung wirkenden Kräfte, die zwischen Außenring und Gegenelement auftreten, bewirkt. Das mindestens eine Formschlusselement arbeitet sich sozusagen in die an der formschlüssigen Verbindung beteiligten Bauteile ein. So wird letztendlich das Ringwandern und Rutschen vollständig unterbunden.

Durch die Erfindung werden die voranstehend beschriebenen Schädigungen, die durch Ringwandern hervorgerufen werden, zuverlässig verhindert.

Auf die erfindungsgemäße Weise ausgebildete Formschlussverbindungen weisen Formschlusselemente auf, die integral mit dem jeweiligen Bauteil (Außenring bzw. Gegenelement) ausgebildet sind. Separate, getrennt von dem Außenring bzw. dem Gegenelement ausgebildete Verbindungselemente sind daher zur Bildung des Formschlusses nicht erforderlich. Die Anzahl der benötigten Bauteile wird dadurch minimiert. Auch der Montageaufwand ist vergleichsweise gering

Die erfindungsgemäße Lösung ist sehr flexibel einsetzbar. Sie kann sowohl bei getriebelosen Windenergieanlagen als auch bei solchen mit Getriebe eingesetzt werden. Bei getriebelosen Windenergieanlagen kann die Anschlusskonstruktion z.B. die Gondel oder ein Teil der Gondel der Windenergieanlage sein.

Nach einer Ausführungsform der erfindungsgemäßen Hauptlageranordnung ist vorgesehen, dass über den Umfang verteilt eine Mehrzahl von ersten und zweiten Formschlusselementen angeordnet sind, wobei vorzugsweise die Umfangsabschnitte zwischen benachbarten Formschlusselementen gleich lang sind. Dadurch wird insgesamt in Umfangsrichtung eine große Fläche der formschlüssigen Verbindung zur Verfügung gestellt. Jede einzelne Formschlussverbindung ist daher nur vergleichsweise geringen Flächenpressungen ausgesetzt. Die Lebensdauer von Lageranordnungen mit einer Mehrzahl von formschlüssigen Verbindungen kann gegenüber Ausführungsformen mit nur einer einzigen formschlüssigen Verbindung deutlich gesteigert werden. Sind die einzelnen formschlüssigen Verbindungen gleichmäßig über den Umfang verteilt angeordnet, d.h. sind die Umfangsabschnitte zwischen benachbarten Formschlussverbindungen gleich lang, so werden die Kräfte in Umfangsrichtung sehr gleichmäßig von dem Außenring in das Gegenelement eingeleitet und eine unerwünschte Verformung des Außenrings durch ungleichmäßig in das Gegenelement eingeleitete Umfangskräfte wird vermieden.

Nach einer Ausführungsform der erfindungsgemäßen Hauptlageranordnung ist vorgesehen, dass das Gegenelement ein mit der Anschlusskonstruktion drehfest verbundenes Bauteil oder ein an der Anschlusskonstruktion integral ausgebildeter Flansch ist, wobei das mindestens eine zweite Formschlusselement an einer axialen Stirnfläche des Bauteils oder des Flansches ausgebildet ist, welche der axialen Stirnfläche des Außenrings mit dem mindestens einen ersten Formschlusselement zugewandt ist. Dadurch, dass die Formschlusselemente an den Stirnflächen der jeweiligen Bauelemente angeordnet sind, können die Formschlusselemente so ausgebildet werden, dass sie in Radialrichtung eine große Länge aufweisen. Auf diese Weise wird eine große Kraftübertragungsfläche in Umfangrichtung zur Verfügung gestellt, was wiederum zu relativ geringen Flächenpressungen in der einzigen formschlüssigen Verbindung oder in den einzelnen formschlüssigen Verbindungen beiträgt. Auch sind die an den Stirnflächen der Bauteile angeordneten Formschlusselemente fertigungstechnisch einfach herzustellen, was zur Realisierung geringer Herstellungskosten beiträgt.

Um auch einem Ringwandern in Axialrichtung der Anschlusskonstruktion entgegenzuwirken und ein solches axiales Ringwandern zu unterbinden ist nach einer Ausführungsform der erfindungsgemäßen Hauptlageranordnung vorgesehen, dass der Außenring durch mindestens eine lösbare Verbindung wie z.B. eine Schraubverbindung gegen eine Relativbewegung zur Anschlusskonstruktion in Axialrichtung gesichert ist. Die lösbare Verbindung kann z.B. zwischen dem Außenring und dem Gegenelement ausgebildet sein. Die lösbare Verbindung kann z.B. in den Umfangsbereichen zwischen den ersten und den zweiten Formschlusselementen angeordnet sein. Es kann eine oder es können mehrere lösbare Verbindungen vorgesehen sein.

Nach einer Ausführungsform der erfindungsgemäßen Hauptlageranordnung ist vorgesehen, dass der Außenring ein Lagerring aus einem Vergütungsstahl mit einer oder mehreren induktiv randschichtgehärteten Wälzkörperlaufbahnen ist. Bei dieser Ausführungsform können die ersten Formschlusselemente einfach und ohne großen fertigungstechnischen Aufwand in den Außenring eingebracht werden, weil die nicht zum randschichtgehärteten Laufbahnbereich gehörenden Bereiche des Außenrings nicht gehärtet sind und daher ohne Weiteres mechanisch bearbeitet, z.B. spanabhebend bearbeitet, werden können, um die ersten Formschlusselemente einzubringen. Grundsätzlich möglich wäre die Verwirklichung der vorliegenden Erfindung auch an durchgehärteten oder einsatzgehärteten Außenringen, die z.B. aus dem Werkstoff 100Cr6 oder aus Einsatzstahl bestehen, allerdings wäre dann das Einbringen der Formschlusselemente in den gehärteten Außenring deutlich aufwändiger.

Nach einer Ausführungsform der erfindungsgemäßen Hauptlageranordnung ist vorgesehen, dass das Wälzlager dazu eingerichtet ist, im Betrieb des Lagers in Axialrichtung wirkende Kräfte aufzunehmen, wobei der Außenring durch die auf ihn in Axialrichtung wirkenden Kräfte derart in Richtung des Gegenelements gedrückt wird, dass das mindestens eine erste Formschlusselement in Richtung des mindestens einen zweiten Formschlusselements gedrückt wird. Hierdurch wird der Vorteil erreicht, dass der Kraftfluss durch das Wälzlager die Formschlussverbindung unterstützt. Der Außenring wird im Betrieb des Wälzlagers durch die auf ihn einwirkenden Axialkräfte immer zum Gegenelement hin gedrückt, d.h. immer in Richtung auf die Formschlussverbindung. Dadurch kann der Formschluss nicht verloren gehen, selbst wenn keine mechanischen Sicherungsmaßnahmen zur Vermeidung eines Verlustes des Formschlusses ergriffen worden sind. Die im Betrieb auf das Wälzlager einwirkenden Kräfte stellen bei dieser Ausführungsform also den in Umfangsrichtung wirkenden Formschluss zwischen Außenring und Gegenelement sicher. Gemäß einer Ausführungsform dieser erfindungsgemäßen Hauptlageranordnung kann das Wälzlager als angestelltes Kegelrollenlager ausgebildet sein.

Nach einer Ausführungsform der erfindungsgemäßen Hauptlageranordnung ist vorgesehen, dass ein Innenring des Wälzlagers an mindestens einer axialen Stirnfläche mindestens ein drittes Formschlusselement aufweist, wobei ein mit dem Rotor drehfest verbundenes zweites Gegenelement vorgesehen ist, welches mindestens ein viertes Formschlusselement aufweist, und wobei zwischen dem dritten und dem vierten Formschlusselement eine in Umfangsrichtung des Innenrings wirksame Formschlussverbindung ausgebildet ist. Bei dieser Ausführungsform sind somit sowohl an dem Außenring als auch an dem Innenring des Wälzlagers in Umfangsrichtung wirksame formschlüssige Verbindungen vorgesehen, durch die ein Ringwandern sowohl des Außenrings als auch des Innenrings wirksam verhindert wird. Die eingangs beschriebenen Schadensmechanismen, die durch Ringwandern auftreten können, werden auf diese Weise erfindungsgemäß in Bezug auf beide Lagerringe verhindert.

Die Erfindung wird nachfolgend anhand der Figuren näher erläutert. Es zeigen jeweils schematisch
- Fig. 1: einen Außenring gemäß einer ersten Ausführungsform der Erfindung mit ersten Formschlusselementen,
- Fig. 2: eine Ausführungsform der Erfindung mit einem in einer ringförmigen Aufnahme der Anschlusskonstruktion montiertem Wälzlageraußenring,
- Fig. 3: eine Ausführungsform der Erfindung, bei der sowohl der Außenring als auch der Innenring des Wälzlagers gegen Ringwandern in Umfangsrichtung gesichert sind,
- Fig. 4: eine Ausführungsform der erfindungsgemäßen Formschlussverbindung,
- Fig. 5: eine zu Fig. 5 alternative Ausführungsform der erfindungsgemäßen Formschlussverbindung.

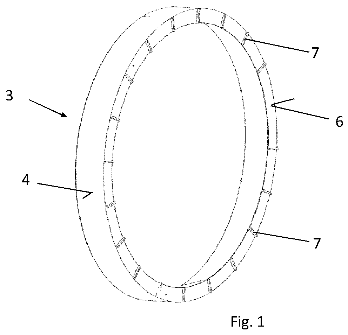

Fig. 1 zeigt einen Außenring 3 eines Großwälzlagers in einer perspektivischen Ansicht. Die übrigen Bauteile des Wälzlagers 2, also insbesondere der Innenring und die zwischen Außenring 3 und Innenring angeordneten Wälzkörper, sind in Fig. 1 nicht dargestellt.

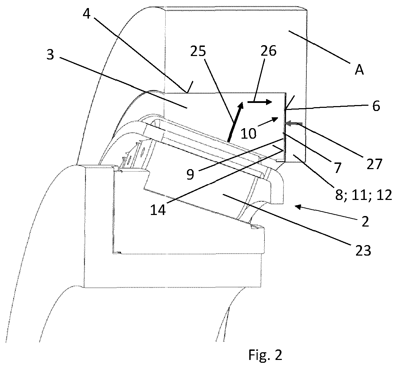

Der Außenring 3 weist eine axiale Stirnfläche 6 und eine radiale Außenumfangsfläche 4 auf. Weiter weist der Außenring 3 erste Formschlusselemente 7 auf, die gegenüber der axialen Stirnfläche 6 hervorspringen. Der Außenring 3 ist im montierten Zustand mit seiner radialen Außenumfangsfläche 4 in einer ringförmigen Aufnahme A (vgl. Fig. 2 ) mittels Presssitz aufgenommen. Die in Fig. 1 nicht dargestellte Aufnahme A ist fest mit der Anschlusskonstruktion verbunden.

Fig. 2 zeigt eine Ausführungsform der Erfindung mit einem Außenring 3, der in der ringförmigen Aufnahme A über einen Presssitz drehfest aufgenommen ist. Die Aufnahme A ist drehfest mit einer nicht dargestellten Anschlusskonstruktion verbunden. Die Aufnahme A weist ein Gegenelement 8 auf, das im dargestellten Ausführungsbespiel als Flansch 12 ausgebildet ist. Der Flansch 12 ist im dargestellten Ausführungsbeispiel ein integraler, einstückiger Bestandteil der Aufnahme A.

Der Außenring 3 weist eine axiale Stirnfläche 6 auf, welche dem Gegenelement 8 zugewandt ist. Das Gegenelement 8 bzw. der Flansch 12 weist eine der Stirnfläche 6 zugewandte axiale Stirnfläche 14 auf. An der axialen Stirnfläche 6 des Außenrings 3 sind erste Formschlusselemente 7 ausgebildet, die mit an der Stirnfläche 14 des Gegenelements 8 ausgebildeten zweiten Formschlusselementen 9 eine formschlüssige Verbindung 10 bilden, welche in Umfangsrichtung wirksam ist.

Die im Betrieb des Lagers auftretenden Axialkräfte unterstützen den Formschluss der Formschlussverbindungen 10. Das Wälzlager 2 ist dazu eingerichtet, im Betrieb des Lagers in Axialrichtung wirkende Kräfte aufzunehmen. Die von den Wälzkörpern 23 auf den Außenring 3 einwirkende Kraft 25 hat eine in Axialrichtung wirkende Kraftkomponente 26, durch welche der Außenring 3 in Richtung auf das Gegenelement 8 gedrückt wird. Dadurch wird die Stirnfläche 6 des Außenrings 3 im Betrieb der Hauptlageranordnung durch die auf den Außenring 3 einwirkenden Kräfte gegen die Stirnfläche 14 des Flansches 12 gedrückt. Dies ist in Fig. 2 durch den die Reaktionskraft andeutenden Pfeil 27 angedeutet. Die Formschlusselemente 7, 9 können auf diese Weise ihren formschlüssigen Eingriff nicht verlieren. Die im Betrieb auftretenden, auf den Außenring 3 einwirkenden Kräfte verhindern auf diese Weise, dass sich die Verbindungspartner der formschlüssigen Verbindungen 10 in Axialrichtung voneinander entfernen und der Formschluss verloren geht, ohne dass dazu eine separate Vorspannkraft aufgebracht werden muss. Insbesondere sind keine separaten Vorspannelemente erforderlich, durch welche der Außenring 3 gegen den Flansch 12 vorgespannt wird.

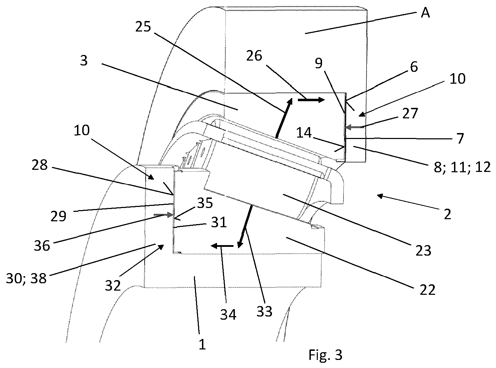

Fig. 3 zeigt eine Ausführungsform der Erfindung, bei der sowohl der Außenring 3 als auch der Innenring 22 des Wälzlagers 2 gegen Ringwandern in Umfangsrichtung gesichert sind. Der Innenring 22 weist an mindestens seiner axialen Stirnfläche 28 mehrere über den Umfang verteilt angeordnete dritte Formschlusselemente 29 auf. Das mit dem Rotor 1 drehfest verbundene zweite Gegenelement 30 weist eine Mehrzahl von über den Umfang verteilt angeordneten vierten Formschlusselementen 31 auf. Zwischen den dritten 29 und den vierten Formschlusselementen 31 sind in Umfangsrichtung des Außenrings 22 wirksame Formschlussverbindung 32 ausgebildet.

Die im Betrieb auftretenden, auf den Innenring 22 einwirkenden Kräfte unterstützen den Formschluss der Formschlussverbindungen 32. Das Wälzlager 2 ist dazu eingerichtet, im Betrieb des Lagers in Axialrichtung wirkende Kräfte aufzunehmen. Die von den Wälzkörpern 23 auf den Innenring 22 einwirkende Kraft 33 hat eine in Axialrichtung wirkende Kraftkomponente 34, durch welche der Außenring 22 in Richtung auf das zweite Gegenelement 30 gedrückt wird. Dadurch wird die Stirnfläche 28 des Innenrings 22 im Betrieb der Hauptlageranordnung durch die auf den Innenring 22 einwirkenden Kräfte gegen die der Stirnfläche 28 zugewandte Stirnfläche 35 des zweiten Gegenelements 30 gedrückt. Dies ist in Fig. 3 durch den Pfeil 36 angedeutet. Die Formschlusselemente 29, 31 können auf diese Weise ihren formschlüssigen Eingriff nicht verlieren. Die im Betrieb auftretenden, auf den Innenring 22 einwirkenden Kräfte verhindern auf diese Weise, dass sich die Verbindungspartner der formschlüssigen Verbindungen 32 in Axialrichtung voneinander entfernen und der Formschluss verloren geht, ohne dass dazu eine separate Vorspannkraft aufgebracht werden muss. Insbesondere sind keine separaten Vorspannelemente erforderlich, durch welche der Innenring 22 gegen das zweite Gegenelement 30 vorgespannt wird.

In dem in Fig. 3 dargestellten Ausführungsbeispiel ist das zweite Gegenelement 30 als mit dem Rotor 1 integral ausgebildeter Flansch 38 ausgebildet.

Der Außenring 3 und die den Außenring 3 aufnehmende Aufnahme A sind in dem in Fig. 3 dargestellten Ausführungsbeispiel analog zu dem in Fig. 2 dargestellten Ausführungsbeispiel ausgeführt. Die Aufnahme A ist analog zu der in Fig. 2 dargestellten Ausführungsform als ringförmiges Bauteil ausgebildet, welches drehfest mit in Fig. 3 nicht dargestellten Elementen der Anschlusskonstruktion verbunden ist. Die Anschlusskonstruktion kann z.B. Bestandteil eines Gehäuses der Gondel einer Windenergieanlage sein.

Es versteht sich, dass im Rahmen der denkbaren Ausführungsformen der Erfindung alle Formschlusselemente 7, 9, 29, 31 als Vorsprünge und/oder Ausnehmungen ausgebildet sein können.

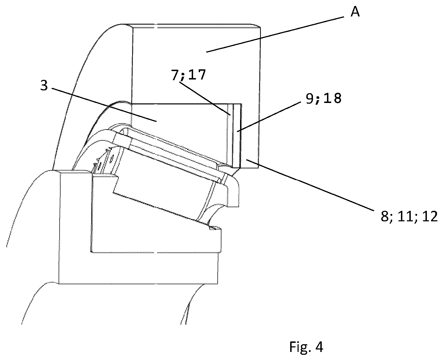

Fig. 4 zeigt eine Ausführungsform der Erfindung, bei der die ersten Formschlusselemente 7 am Außenring 3 als Ausnehmungen 17 und die zweiten Formschlusselemente 9 an dem Gegenelement 8/dem Flansch 12 als Vorsprünge 18 ausgebildet sind. Die Formschlussverbindung wird durch das Eingreifen der Vorsprünge in die Ausnehmungen hergestellt.

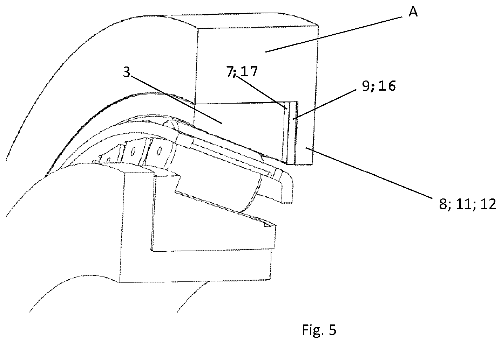

Fig. 5 zeigt eine Ausführungsform der Erfindung, bei der die ersten Formschlusselemente 7 am Außenring 3 als Vorsprünge 15 und die zweiten Formschlusselemente 9 an dem Gegenelement 8/dem Flansch 12 als Ausnehmungen 16 ausgebildet sind. Die Formschlussverbindung wird durch das Eingreifen der Vorsprünge in die Ausnehmungen hergestellt.

### Bezugszeichenliste

- 1: Rotor
- 2: Wälzlager
- 3: Außenring
- 4: Außenumfangsfläche
- 5: Mantelfläche
- 6: Stirnfläche
- 7: Formschlusselement
- 8: Gegenelement
- 9: Formschlusselement
- 10: Formschlussverbindung
- 11: Bauteil
- 12: Flansch
- 14: Stirnfläche
- 15: Vorsprung
- 16: Ausnehmung
- 17: Ausnehmung
- 18: Vorsprung
- 19: Ausnehmung
- 20: Ausnehmung
- 22: Außenring
- 23: Wälzkörper
- 24: Käfig
- 25: Kraft
- 26: Kraftkomponente
- 27: Pfeil
- 28: Stirnfläche
- 29: Formschlusselelement
- 30: Gegenelement
- 31: Formschlusselement
- 32: Formschlussverbindung
- 33: Kraft
- 34: Kraftkomponente
- 35: Stirnfläche
- 36: Pfeil
- 37: Bauteil
- 38: Flansch

## Patentansprüche

1. Hauptlageranordnung zur Lagerung eines drehbaren Rotors (1) einer Windenergieanlage, wobei der Rotor (1) über mindestens ein Wälzlager (2) drehbar gegenüber einer Anschlusskonstruktion gelagert ist, wobei das Wälzlager (2) einen Außenring (3) aufweist, der über seine radiale Außenumfangsfläche (4) mit einer ringförmigen Aufnahme (A) der Anschlusskonstruktion über einen Presssitz verbundenen ist, wobei der Außenring (3) an mindestens einer axialen Stirnfläche (6) mindestens ein erstes Formschlusselement (7) aufweist, wobei ein mit der Anschlusskonstruktion drehfest verbundenes Gegenelement (8) vorgesehen ist, welches mindestens ein zweites Formschlusselement (9) aufweist, und wobei zwischen dem ersten (7) und dem zweiten Formschlusselement (9) eine in Umfangsrichtung des Außenrings (3) wirksame Formschlussverbindung (10) ausgebildet ist,
wobei das Gegenelement (8) ein mit der Anschlusskonstruktion drehfest verbundenes Bauteil (11) oder ein an der Anschlusskonstruktion integral ausgebildeter Flansch (12) ist, wobei das mindestens eine zweite Formschlusselement (9) an einer axialen Stirnfläche (14) des Bauteils (11) oder des Flansches (12) ausgebildet ist, welche der axialen Stirnfläche (6) des Außenrings (3) mit dem mindestens einen ersten Formschlusselement (7) zugewandt ist,
**dadurch gekennzeichnet,**
**dass** das mindestens eine erste Formschlusselement (7) als in Axialrichtung gegenüber der Stirnfläche (6) des Außenrings (3) vorspringender Vorsprung (15) und das mindestens eine zweite Formschlusselement (9) als in Axialrichtung gegenüber der Stirnfläche (14) des Bauteils (11) oder des Flansches (12) zurückspringende Ausnehmung (16) ausgebildet ist, oder dass das mindestens eine erste Formschlusselement (7) als in Axialrichtung gegenüber der Stirnfläche (6) des Außenrings (3) zurückspringende Ausnehmung (17) und das mindestens eine zweite Formschlusselement (9) als in Axialrichtung gegenüber der Stirnfläche (14) des Bauteils (11) oder des Flansches (12) vorspringender Vorsprung (18) ausgebildet ist, wobei der Vorsprung (15; 18) in die Ausnehmung (16; 17) unter Ausbildung der in Umfangsrichtung wirksamen Formschlussverbindung (10) eingreift.

2. Hauptlageranordnung nach Anspruch 1,
**dadurch gekennzeichnet,**
**dass** über den Umfang verteilt eine Mehrzahl von ersten und zweiten Formschlusselementen (7, 9) angeordnet sind, wobei vorzugsweise die Umfangsabschnitte zwischen benachbarten Formschlusselementen (7, 9) gleich lang sind.

3. Hauptlageranordnung nach einem der voranstehenden Ansprüche,
**dadurch gekennzeichnet,**
**dass** der Außenring (3) durch mindestens eine lösbare Verbindung wie z.B. eine Schraubverbindung gegen eine Relativbewegung zur Anschlusskonstruktion in Axialrichtung gesichert ist.

4. Hauptlageranordnung nach einem der voranstehenden Ansprüche,
**dadurch gekennzeichnet,**
**dass** der Außenring (3) ein Lagerring aus einem Vergütungsstahl mit einer oder mehreren induktiv randschichtgehärteten Wälzkörperlaufbahnen ist.

5. Hauptlageranordnung nach einem der voranstehenden Ansprüche,
**dadurch gekennzeichnet,**
**dass** das Wälzlager (2) dazu eingerichtet ist, im Betrieb des Lagers in Axialrichtung wirkende Kräfte aufzunehmen, wobei der Außenring (3) durch die auf ihn in Axialrichtung wirkenden Kräfte derart in Richtung des Gegenelements (8) gedrückt wird, dass das mindestens eine erste Formschlusselement (7) in Richtung des mindestens einen zweiten Formschlusselements (9) gedrückt wird.

6. Hauptlageranordnung nach Anspruch 5,
**dadurch gekennzeichnet,**
**dass** das Wälzlager (2) als angestelltes Kegelrollenlager ausgebildet ist.

7. Hauptlageranordnung nach einem der voranstehenden Ansprüche,
**dadurch gekennzeichnet,**
**dass** ein Innenring (22) des Wälzlagers (2) an mindestens einer axialen Stirnfläche (28) mindestens ein drittes Formschlusselement (29) aufweist, wobei ein mit dem Rotor (1) drehfest verbundenes zweites Gegenelement (30) vorgesehen ist, welches mindestens ein viertes Formschlusselement (31) aufweist, und wobei zwischen dem dritten (29) und dem vierten Formschlusselement (31) eine in Umfangsrichtung des Innenrings (22) wirksame Formschlussverbindung (32) ausgebildet ist.

## Claims

1. Main bearing arrangement for supporting a rotatable rotor (1) of a wind turbine, wherein the rotor (1) is rotatably mounted relative to a connecting structure via at least one rolling bearing (2) relative to a connecting structure, wherein the rolling bearing (2) has an outer ring (3) which is connected via its radial outer circumferential surface (4) to an annular receptacle (A) of the connecting structure by means of a press fit, wherein the outer ring (3) has at least one first form-fit element (7) on at least one axial end face (6), wherein a counter-element (8) connected in a rotationally fixed manner to the connecting structure is provided, which has at least one second form-fit element (9), and wherein a form-fit connection (10) effective in the circumferential direction of the outer ring (3) is formed between the first (7) and the second positive locking element (9) there is a positive locking connection (10) effective in the circumferential direction of the outer ring (3), wherein
the counter element (8) is a component (11) connected to the connecting structure in a rotationally fixed manner or a flange (12) formed integrally on the connecting structure, wherein the at least one second form-fit element (9) is formed on an axial end face (14) of the component (11) or the flange (12), which faces the axial end face (6) of the outer ring (3) with the at least one first form-fit element (7),
**characterized in that**
the at least one first form-fit element (7) is formed as a projection (15) projecting in the axial direction opposite the end face (6) of the outer ring (3) and the at least one second form-fitting element (9) is designed as a recess (16) set back in the axial direction relative to the end face (14) of the component (11) or the flange (12), or that the at least one first form-fitting element (7) is designed as a recess (17) receding in the axial direction relative to the end face (6) of the outer ring (3) and the at least one second positive locking element (9) is designed as a projection (18) projecting in the axial direction relative to the end face (14) of the component (11) or the flange (12), wherein the projection (15; 18) engages in the recess (16; 17), forming the form-fit connection (10) acting in the circumferential direction.

2. Main bearing arrangement according to claim 1,
**characterized in that**
that a plurality of first and second form-fit elements (7, 9) are arranged distributed around the circumference, wherein preferably the circumferential sections between adjacent form-fit elements (7, 9) are of equal length.

3. Main bearing arrangement according to one of the preceding claims,
**characterized in**
**that** the outer ring (3) is secured against relative movement in the axial direction relative to the connecting structure by at least one detachable connection, such as a screw connection.

4. Main bearing arrangement according to one of the preceding claims,
**characterized in that**
that the outer ring (3) is a bearing ring made of a tempered steel with one or more inductively surface-hardened rolling element raceways.

5. Main bearing arrangement according to one of the preceding claims,
**characterized**
that the rolling bearing (2) is designed to absorb forces acting in the axial direction during operation of the bearing, whereby the outer ring (3) is pressed in the direction of the counter element (8) by the forces acting on it in the axial direction in such a way that the at least one first form-fitting element (7) is pressed in the direction of the at least one second form-fitting element (9).

6. Main bearing arrangement according to claim 5,
**characterized in**
**that** the rolling bearing (2) is designed as an angled tapered roller bearing.

7. Main bearing arrangement according to one of the preceding claims,
**characterized in**
**that** an inner ring (22) of the roller bearing (2) has at least one third positive locking element (29) on at least one axial end face (28), wherein a second counter element (30) connected in a rotationally fixed manner to the rotor (1) is provided, which has at least one fourth positive locking element (31), and wherein a form-fit connection (32) effective in the circumferential direction of the inner ring (22) is formed between the third (29) and the fourth form-fit element (31).

## Revendications

1. Dispositif de palier principal pour le montage d'un rotor rotatif (1) d'une éolienne, le rotor (1) étant monté de manière rotative par rapport à une structure de raccordement au moyen d'au moins un palier à roulement (2) par rapport à une structure de raccordement, le palier à roulement (2) comportant une bague extérieure (3) qui est reliée par un ajustement serré, par l'intermédiaire de sa surface périphérique extérieure radiale (4), à un logement annulaire (A) de la structure de raccordement, la bague extérieure (3) comporte au moins un premier élément de liaison par complémentarité de forme (7) sur au moins une surface frontale axiale (6), un contre-élément (8) relié de manière solidaire en rotation à la structure de raccordement étant prévu, lequel comporte au moins un deuxième élément de liaison par complémentarité de forme (9), et une liaison par complémentarité de forme (10) agissant dans la direction circonférentielle de la bague extérieure (3) étant formée entre le premier (7) et le deuxième élément de liaison par complémentarité de forme (9) est formée une liaison par complémentarité de forme (10) agissant dans la direction circonférentielle de la bague extérieure (3),
le contre-élément (8) étant un composant (11) relié de manière solidaire en rotation à la structure de raccordement ou une bride (12) formée d'un seul tenant sur la structure de raccordement, le au moins un deuxième élément de liaison par complémentarité de forme (9) étant formé sur une face frontale axiale (14) du composant (11) ou de la bride (12), qui est tournée vers la surface frontale axiale (6) de la bague extérieure (3) avec le au moins un premier élément de liaison par complémentarité de forme (7),
**caractérisé en ce**
**que** le au moins un premier élément de liaison par complémentarité de forme (7) étant conçu comme une saillie (15) faisant saillie dans la direction axiale par rapport à la surface frontale (6) de la bague extérieure (3) et le au moins un deuxième élément de liaison par complémentarité de forme (9) est réalisé sous la forme d'un évidement (16) en retrait dans la direction axiale par rapport à la surface frontale (14) du composant (11) ou de la bride (12), ou que le au moins un premier élément de liaison par complémentarité de forme (7) est conçu comme un évidement (17) en retrait dans la direction axiale par rapport à la face frontale (6) de la bague extérieure (3) et le au moins un deuxième élément de liaison par complémentarité de forme (9) est conçu comme une saillie (18) en saillie dans la direction axiale par rapport à la face frontale (14) du composant (11) ou de la bride (12), la saillie (15; 18) s'engage dans l'évidement (16 ; 17) en formant la liaison par complémentarité de forme (10) agissant dans la direction circonférentielle.

2. Dispositif de palier principal selon la revendication 1,
**caractérisé en ce qu'**
qu'une pluralité de premiers et seconds éléments de liaison par complémentarité de forme (7, 9) sont répartis sur la circonférence, les sections circonférentielles entre des éléments de liaison par complémentarité de forme (7, 9) adjacents étant de préférence de même longueur.

3. Dispositif de palier principal selon l'une des revendications précédentes,
**caractérisé en ce**
**que** la bague extérieure (3) est bloquée contre tout mouvement relatif par rapport à la structure adjacente dans le sens axial par au moins une liaison amovible, telle qu'une liaison vissée.

4. Dispositif de palier principal selon l'une des revendications précédentes,
**caractérisé en ce que**
**que** la bague extérieure (3) est une bague de palier en acier trempé et revenu comportant une ou plusieurs chemins de roulement à corps roulants trempés par induction.

5. Dispositif de palier principal selon l'une des revendications précédentes,
**caractérisé en ce**
**que** le palier à roulement (2) est conçu pour absorber les forces agissant dans le sens axial pendant le fonctionnement du palier, la bague extérieure (3) étant pressée par les forces agissant sur elle dans le sens axial en direction de l'élément opposé (8) de telle sorte que le au moins un premier élément de liaison par complémentarité de forme (7) soit pressé en direction du au moins un deuxième élément de liaison par complémentarité de forme (9).

6. Dispositif de palier principal selon la revendication 5,
**caractérisé en ce**
**que** le palier à roulement (2) est conçu comme un palier à rouleaux coniques incliné.

7. Dispositif de palier principal selon l'une des revendications précédentes,
**caractérisé en ce**
**qu'**une bague intérieure (22) du palier à roulement (2) comporte au moins un troisième élément de liaison par complémentarité de forme (29) sur au moins une face frontale axiale (28), un deuxième élément complémentaire (30) relié de manière solidaire en rotation au rotor (1) étant prévu, lequel comporte au moins un quatrième élément de liaison par complémentarité de forme (31), et une liaison par complémentarité de forme (32) agissant dans la direction circonférentielle de la bague intérieure (22) étant formée entre le troisième (29) et le quatrième élément de liaison par complémentarité de forme (31).
